# EUROPEAN PATENT SPECIFICATION

(11) **EP 0 577 899 B1**
(45) Date of publication and mention of the grant of the patent: **08.10.1997**
(21) Application number: 92402012.6
(22) Date of filing: 10.07.1992
(51) Int. Cl.: H04N 7/04, H04N 5/38

(54) **Aural carrier correction system and method**
System und Methode zur Korrektur des Tonträgers
Système et méthode de correction pour la porteuse de son

(43) Date of publication of application: 12.01.1994
(73) Proprietor: THOMCAST, 78700 Conflans-Sainte-Honorine (FR)
(72) Inventor: Hong, Anh Ta, F-92045 Paris la Défense (FR); Kiesel, Raymond-Carl, F-92045 Paris la Défense (FR)
(74) Representative: Courtellemont, Alain

(56) References cited:
- EP-A- 0 132 760
- EP-A- 0 149 950
- EP-A- 0 190 073
- EP-A- 0 280 356
- DE-A- 3 306 562
- GB-A- 2 245 115

## Description

The present invention generally relates to common amplification television transmitters that amplify both aural and visual signals simultaneously, and more particularly, to a system and method for reducing residual modulation of the aural carrier typically caused in common amplification television transmitters.

Aural carrier distortion is a systems problem which involves all of the elements of a television communication system, including the receiver as well as the transmitter. This unwanted distortion is caused by video components of the television signal modulating the visual carrier and because of the specific frequency bandwidth, those same video components affecting the aural signal in a different phase domain. This unwanted aural carrier modulation occurs in both the phase and amplitude domains and is related to the continuous modulation of the total signal envelope by the video signal components.

Specifically, the component of the video signal relating to the line scan frequency, which is found at 15.734 Khz and harmonics thereof, is transferred as noise to the aural signal. Because the pilot frequency for stereo sound in the U.S. is set at 15.734 KHz, if the noise component added to the aural signal is sufficiently large, the receiver will erroneously perceive this noise as an indication that a stereo signal is being received. As a result, the Federal Communications Commission (F.C.C.) requires that the noise component at 15.734 KHz be 46 db below the reference level for the stereo pilot signal, i.e., the pilot frequency is protected.

Typically, such unwanted phase and amplitude modulation of the aural carrier is prevented, at the transmitter, by using separate picture modulation and sound transmitters, thereby avoiding the coprocessing of the visual and aural signals of the television signal. (See paper entitled "Intercarrier Buzz Phenomena Analysis and Cures" by Fockens et al., IEEE Trans. on Consumer Electronics CE-27 (3) 381-394 (August 1981).) This separate transmitter arrangement, however, does not prevent unwanted aural carrier distortion and noise at the receiver. Patents directed to addressing correction of the aural carrier distortion at the television receiver include: U.S. Patents US-A-3,135,827, US-A-4,237,485, US-A-4,518,997, US-A-4,602,288, and US-A-4,716,464, as well as JP-A-5498118, JP-A-55-53977, JP-A-55-99887, JP-A-59-51676 and JP-A-59-51677.

Common amplification television transmitter arrangements are known such as disclosed by DE 3306562-A wherein the audio carrier is mixed with the amplitude modulated picture carrier so that both carriers then have the same phasing errors and these cancel in the intercarrier. However, this arrangement is directed to suppressing phasing errors in the picture carrier rather than addressing the problem of unwanted phase and amplitude modulation or noise in the aural carrier.

Moreover, aural carrier correction circuits currently in use do not independently correct the aural components; but rather, the entire commonly amplified signal is corrected without regard to phase differences that are present between the visual and aural carriers. These phase differences prohibit one correction signal from exactly canceling the unwanted products on both carriers simultaneously.

Therefore, one object of the present invention is to provide a system and method for reducing unwanted phase and amplitude modulation of the aural carrier of a common amplification television transmitter.

Another object of the present invention is to provide a system and method for reducing unwanted noise in the aural signal received from a common amplification television transmitter so as to comply with F.C.C. specifications for protection of the stereo pilot frequency.

A further object of the present invention is to provide a system and method for reducing unwanted phase and amplitude modulation of the aural carrier of a common amplification television transmitter which add phase and amplitude components that are directly opposite to those unwanted products caused by the common amplification technique in the following output stages of the transmitter.

Yet another object of the present invention is to provide a system and method for reducing unwanted noise appearing at any specific frequency in the aural signal received from a common amplification television transmitter.

One advantageous feature of the present invention is that the correction of the aural signal does not effect the linearity of the visual signal.

A further advantageous feature of the present invention is the ability to correct the aural carrier independently of the visual carrier.

The present invention provides for reducing unwanted noise in the aural signal independently of and in time with the video modulation. According to preferred embodiments of the system and method of the present invention, phase and amplitude components are added to the aural signal that are directly opposite to those unwanted products caused by the common amplification technique in the output stages of the transmitter. Said unwanted products are determined by means of spectral analysis of the demodulated aural signal. To accomplish this, phase and amplitude non-linear video signals are separately generated and phase and amplitude modulators are employed which are capable of effecting one parameter (phase or amplitude) without changing the other.

According to a preferred embodiment of the present invention these and other objects, advantages and features of the present invention are provided by an aural carrier correction system for a common amplification television transmitter which amplifies both an aural signal and a visual signal simultaneously. The system comprises a video delay circuit for receiving and delaying a video signal to provide a delayed video signal as well as a complimentary non-linear amplifier for receiving the delayed video signal and for independently and controllably generating a non-linear amplitude domain video signal and a nonlinear phase domain video signal. Also included is an amplitude and phase modulator for receiving the aural signal and for amplitude and phase modulating the aural signal using the non-linear amplitude domain video signal and the non-linear phase domain video signal, respectively, to generate a modified aural signal. An adder circuit is also included for adding the modified aural signal to the visual signal outputted by a IF vision modulator of the transmitter to reduce unwanted noise appearing at any specific frequency in the aural signal received from the transmitter.

The invention will be better understood from the specification together with the accompanying drawings :
Figure 1 is a block diagram illustrating the components of one embodiment of the system of the present invention;
Figure 2 is a flow chart illustrating one embodiment of the method of the present invention;
Figure 3 is a circuit diagram illustrating one embodiment of the delay circuit and non-linear amplifier of Figure 1; and
Figure 4 is a circuit diagram illustrating one embodiment of the amplitude and phase modulator of Figure 1.

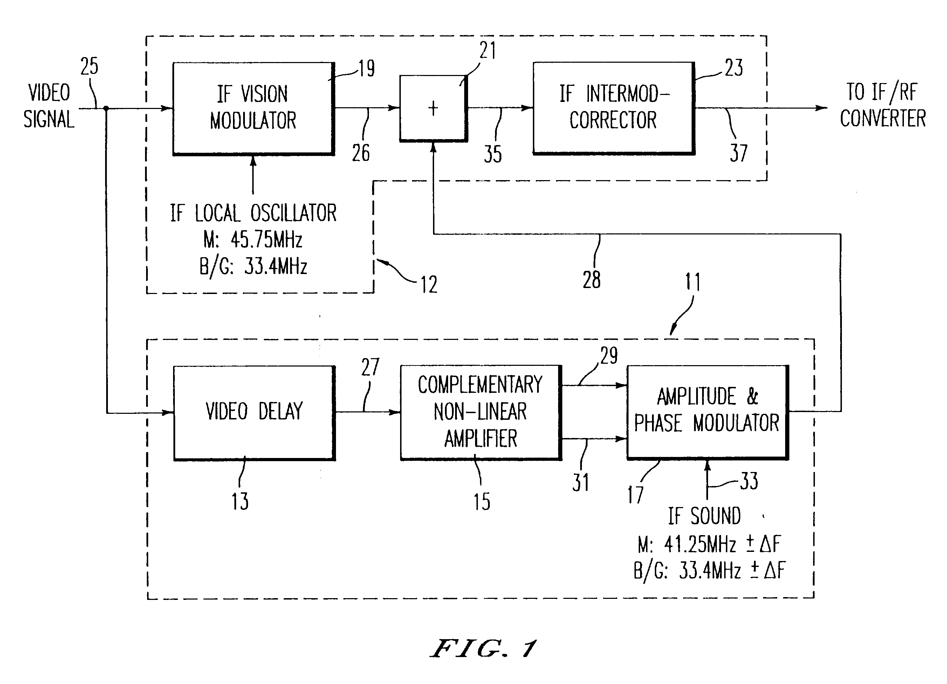

Figure 1 is a block diagram illustrating the various components of one embodiment of the aural carrier correction system, generally indicated at 11, and the connection of the system 11 to a known television transmitter, generally indicated at 12, of which only the IF vision modulator 19, adder 21 and IF intermodulation corrector 23 are shown for the sake of clarity. The system 11 includes a video delay circuit 13, a complimentary non-linear amplifier circuit 15 and an amplitude and phase modulator 17.

As shown in Figure 1, a video signal 25 is inputted to both the IF vision modulator 19 of the transmitter 12 and the video delay circuit 13 of the correction system 11. Because the video signal 25 is delayed by the IF vision modulator 19, the video delay circuit 13 is included to provided a similar delay of the video signal 25 so that there is coincidence of the modified IF aural signal 28 with a visual signal 26, outputted by the IF vision modulator, at the adder 21.

An appropriately delayed video signal 27, outputted by the video delay 13, is inputted to the complementary non-linear amplifier 15. The non-linear amplifier 15 is designed so that the inputted delayed video signal 27 can be selectively modified to produce two independently modified non-linear video signals as desired. In this regard, the non-linear amplifier 15 is constructed so that it can be appropriately configured by a technician to produce the two independent non-linear video signals with various clip points, amplitudes and selectable polarities for each segment thereof.

These non-linear video signals 29, 31, respectively for the amplitude and phase domains, are separately outputted by the non-linear amplifier 15 and independently inputted to the amplitude and phase modulator 17 which also receives an IF aural signal 33. The non-linear amplitude domain video signal 29 amplitude modulates the IF aural signal 33. The independently inputted non-linear phase domain video signal 31 then phase modulates the IF aural, to produce the modified IF aural signal 28 added to the visual signal at adder 21. A combined visual signal and modified aural signal 35 is provided to the IF intermodulation corrector 23, an output 37 of which is provided to an IF/RF converter (not shown).

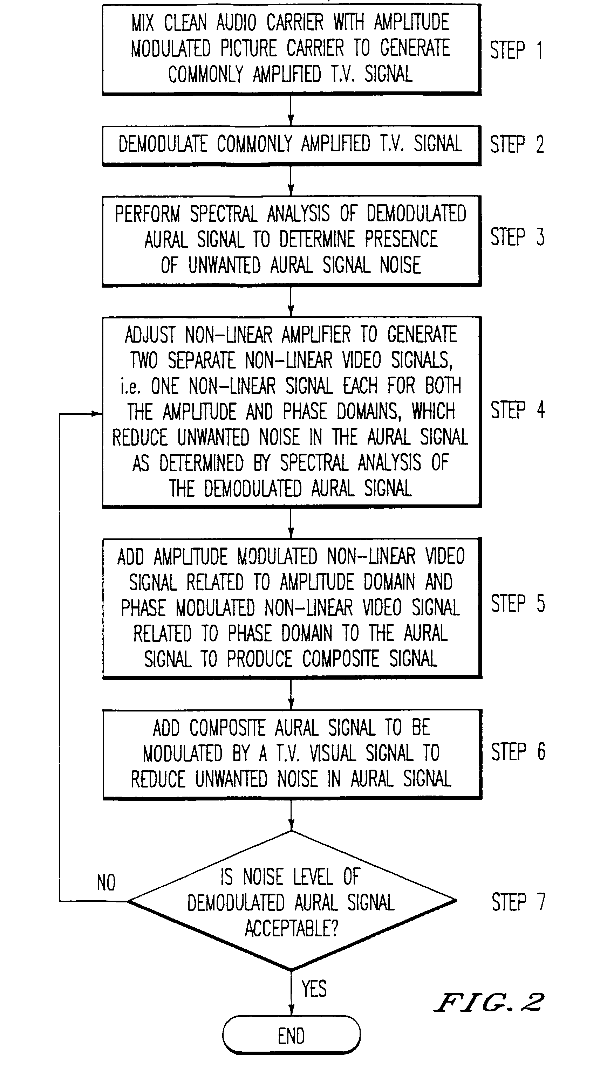

Because the video signal is linear, but does not act on the aural carrier in a linear manner, the complementary non-linear amplifier 15 is adjusted so as to separately modify the delayed video signal 27 to produce the separately generated non-linear video signals 29, 31 such that the unwanted noise components, in the amplitude and phase domains, are eliminated or at least reduced to acceptable levels at any specific frequency. This adjustment procedure is accomplished by spectral analysis of an uncorrected, commonly amplified television signal outputted by the transmitter 12 as will be more fully described with reference to Figure 2.

Referring the Figure 2, in Step 1, a clean aural carrier signal, i.e., no sound, is mixed with an amplitude modulated picture carrier to generate a commonly amplified television reference signal. This reference signal is demodulated in Step 2 and a spectral analysis of the demodulated aural signal is performed in Step 3 to determine the presence and frequency of unwanted aural noise.

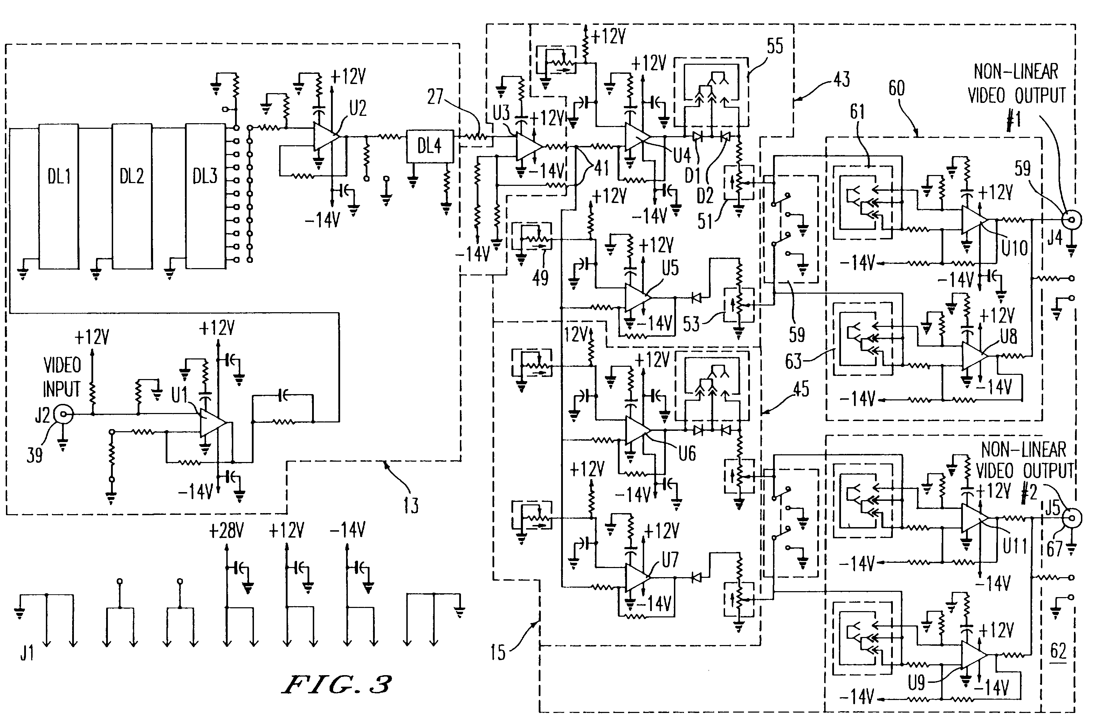

In Step 4, the non-linear amplifier 15 is adjusted to separately generate the non-linear amplitude domain video signal 29 and the non-linear phase domain video signal 31 which are employed to reduce unwanted noise in the aural signal. This adjustment procedure is basically performed by a trial and error adjustment of the non-linear amplifier 15, as will be more fully described hereinafter with particular reference to Figure 3, so that the unwanted noise in the aural signal is reduced.

The separately generated non-linear amplitude domain video signal 29 and non-linear phase domain video signal 31 are inputted to the amplitude and phase modulator 17 along with the clean aural carrier to produce the modified IF aural signal 28 in Step 5 and added to the visual signal 26 at adder 21 in Step 6. The unwanted noise in the demodulated aural signal from the television transmitter 12 is then checked for noise in Step 7, i.e., a spectral analysis of the aural signal is performed as in Step 3, and the adjustment procedure, beginning with Step 4, is repeated if the noise level is unacceptable and if the noise level is acceptable, the adjustment procedure is terminated.

Referring to Figure 3, circuit diagrams are illustrated for both the delay circuit 13 and complementary non-linear amplifier 15. The video delay 13 is provided with a video input 39 for receiving the video signal 25 which is inputted to a series of delay lines DL1, DL2 and DL3 via op-amp U1, provided for amplification and isolation, the op-amp U1 having appropriate circuitry for supplying power and for setting the gain thereof as shown in Figure 3. The output of delay DL3 is inputted to a further amplifier U2, also provided for amplification and isolation, which is connected to a video amp U3 of the non-linear amplifier 15 via a further delay line DL4. The video amp U3 has a settable gain and the output 41 thereof is provided to the inputs of first and second video manipulation circuits 43 and 45. Each of the video manipulation circuits 43 and 45 are identical and therefore only the elements of the first video manipulation circuit 43 will be described hereinafter.

Circuit 43 includes first and second amplifiers U4 and U5 each having an input potentiometer 47, 49 at one input thereof, respectively. The input potentiometers set a threshold input point, i.e., clip points, at which the respective amplifiers U4 and U5 see above or below the DC level set by these input potentiometers 47 and 49. It should be noted that each of the amplifiers U4 and U5 are non-linear and each have output potentiometers 51 and 53, respectively, which set the amplitude level at the output. U4 is provided with a jumper 55 which permits selective connection of diodes D1 and D2 between the output 56 of amplifier U4 and the output potentiometer 51. This arrangement permits the technician to selectively fold the video signal outputted by amplifier U4 back upon itself to further manipulate and modify the signal.

Each of the video manipulation circuits 43 and 45 are respectively connected to output circuits 60, and 62 which control the polarity of the non-linear video signal outputted thereby. In that each of the output circuits are identical in structure, only the structure and operation of output circuit 60 will be described below.

Outputs from amplifiers U4 and U5 of video manipulation circuit 43 are provided to inputs of both amplifiers U10 and U8 of output circuit 60 via a switch 59, each of the amplifiers U10 and U8 having input jumpers 61, 63 respectively connected to their inputs which permit further selective folding of the composite signal provided to each of these amplifiers U10 and U8. Outputs of amplifiers U10 and U8 are connected to a non-linear output terminal 65 which is connected, for example, to a non-linear video input of the amplitude and phase modulator 17 as will be described hereinafter. By operation of the jumper 61 and 62, the combined outputs of amplifiers U10 and U8 can change the direction of the non-linear video signal outputted thereby. Therefore, the output circuit 60, including amplifiers U10 and U8 determines whether the output signal is positive going or negative. In a similar manner, the signal outputted by the second video manipulation circuit 45 is inputted to a similar output circuit 62 which provides a modified non-linear video signal at output 67. This output is also connected to a non-linear video input of modulator 17.

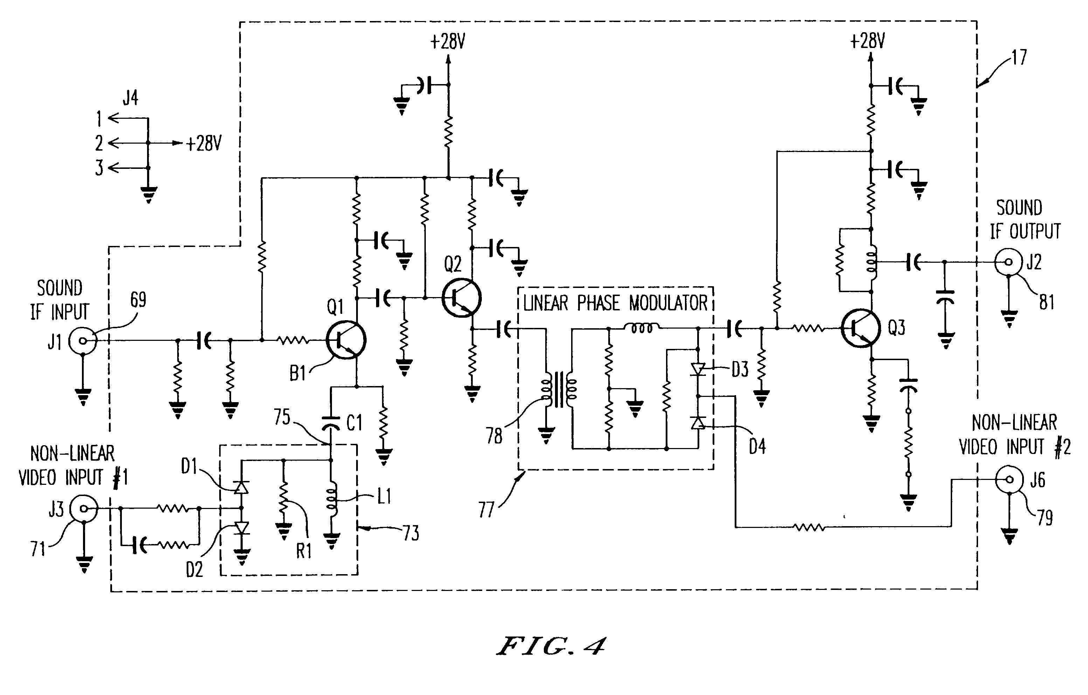

Referring to Figure 4, a circuit diagram of the amplitude and phase modulator 17 is illustrated. The modulator 17 includes a sound IF input 69 for receiving the IF aural signal 33 and a non-linear video input 71 for receiving the non-linear amplitude domain video signal 29 outputted, for example, by non-linear video output 65 of the non-linear amplifier 15. Video input 71 provides the amplitude domain video signal 29 to a amplitude modulator 73 which includes a pair of opposed diodes D1 and D2, resistor R1 connected to ground and inductor L1 also connected to ground. An output 75 of the amplitude modulator 73 is connected by a capacitor C1 to transistor Q1 having a base B1 connected to the sound IF input 69. Transistor Q1 and the associated amplitude modulator 73 provide amplitude modulation of the signal received via sound IF input 69 in direct proportion to the applied non-linear video signal inputted on non-linear video input 71. Transistors Q2 and Q3 provide amplification and isolation of the associated phase modulator circuit 77. This phase modulator circuit 77 preferably includes transformer 78, connected to transistor Q2 and a pair of opposed diodes D3 and D4 between which a further non-linear input 79 is connected. The modulator circuit 77 receives the non-linear phase domain video signal 31 via the non-linear video input 79 which is connected, for example, to non-linear video output 67 of the complementary non-linear amplifier 15. The phase modulator 77, which receives the output from transistor Q2, allows non-linear modulation of the signal received thereby in direct proportion to the applied non-linear video signal on input 79. The resulting modified aural IF signal 28 with the applied correction modulation is outputted via IF output 81 which provides the modified IF aural signal 28 to the adder 21 for further common amplification through the transmitter 12.

Thus, the aural carrier correction system and method of the present invention is used to reduce residual modulation of the aural carrier commonly caused in TV transmitters that amplify both the aural and visual signals simultaneously. This modulation occurs, as indicated above, in both the phase and amplitude domain and is related to the continuous modulation of the total signal envelope by the video components. The reduction of the unwanted phase and amplitude modulation in the aural carrier is, quite simply, effected by applying additional modulation to the aural carrier. This modulation also contains phase and amplitude components but is in direction opposition to the unwanted components. Since the unwanted components are by no means linear in nature, as described above, it is necessary to modify the applied video signal in a non-linear fashion and present it in equal but opposite form to the unwanted phase and amplitude modulation components.

Obviously, numerous modifications and variations of the present invention are possible in light of the above teachings, said modifications and variations being limited only by the scope of the appended claims.

## Claims

1. An aural carrier correction system for a common amplification television transmitter which amplifies both an aural signal and a visual signal simultaneously, the transmitter including at least a IF vision modulator (19) for receiving a video signal (25) and for outputting the visual signal, the system being characterized by comprising :
a video delay circuit (13) for receiving and delaying the video signal to provide a delayed video signal ;
a complementary non-linear amplifier (15) for receiving the delayed video signal and for separately and controllably generating a non-linear amplitude domain video signal and non-linear phase domain video signal which respectively have amplitude and phase components that are directly opposite to unwanted amplitude and phase components added to the aural signal by the video signal, said unwanted amplitude and phase components being determined by spectral analysis of the demodulated aural signal ; and
an amplitude and phase modulator (17) for receiving the aural signal and for amplitude and phase modulating the aural signal using the non-linear amplitude domain video signal and the non-linear phase domain video signal, respectively, to generate a modified aural signal ; and
an adder circuit (21) for adding the modified aural signal to the visual signal outputted by the IF vision modulator to reduce unwanted noise appearing at specific frequencies in the aural signal received from the transmitter.

2. An aural carrier correction system according to Claim 1, characterized in that the video delay circuit (13) provides a delay so that there is coincidence of the modified aural signal with the IF modulated signal at the adder.

3. An aural carrier correction system according to Claim 1, characterized in that the non-linear amplifier (15) includes first and second video signal modifying means (43, 45) for independently generating the non-linear amplitude domain video signal and non-linear phase domain video signal, respectively, with various clip points, amplitudes and selectable polarities from the delayed video signal.

4. An aural carrier correction system according to Claim 3, characterized in that the first video signal modifying means has an output for providing the non-linear amplitude domain video signal to an amplitude modulating input of the amplitude and phase modulator, and wherein the second video signal modifying means has an output for providing the non-linear phase domain video signal to a phase modulator input of the amplitude and phase modulator.

5. An aural carrier correction system according to Claim 4, characterizing in that the amplitude modulating input provides the non-linear amplitude domain video signal to an amplitude modulator (73) of the amplitude and phase modulator (17) for generating an amplitude modulated non-linear signal and wherein the phase modulating input provides the non-linear phase domain video signal to a phase modulator (77) of the amplitude and phase modulator for generating a phase modulated non-linear signal.

6. An aural carrier correction system according to Claim 5, characterized in that the amplitude and phase modulator (17) includes an aural signal input for receiving the aural signal and means for combining the aural signal with amplitude and phase modulation signals to produce the modified aural signal.

7. An aural carrier correction system according to Claim 6, characterized in that the aural signal received at the aural signal input is an IF aural signal.

8. An aural carrier correction system according to Claim 3, characterized in that each of the first and second video signal modifying means (43, 45) includes first (U₄, U₆) and second (U₅, U₇) non-linear amplifier circuits respectively having receiving means for receiving the delayed video signal.

9. An aural carrier correction system according to Claim 8, characterized in that each of the receiving means of the first and second non-linear amplifier circuits include input potentiometers (47, 49) for setting a clip point of the delayed video signal.

10. An aural carrier correction system according to Claim 9, characterized in that each of the first and second non-lin-amplifier circuits include outputs having output potentiometers (51, 53) for setting an amplitude level of a signal outputted thereby.

11. An aural carrier correction system according to Claim 10, characterized in that one of the first and second non-linear amplifier circuits have a jumper (55) for controllably connecting one of a pair of oppositely conducting diodes at the output thereof for selectively folding the delayed video signal back on itself.

12. An aural carrier correction system according to Claim 11, characterized in that each of the first and second video signal modifying means (43, 45) are respectively connected, at an output thereof, to a signal inversion circuit (59) for selectively changing a direction of a non-linear video signal outputted thereby.

13. An aural carrier correction system according to Claim 1, characterized in that the aural signal is an IF aural signal.

14. A method for reducing unwanted aural carrier modulation caused by a video signal in a common amplification television transmitter which amplifies both an aural signal and a visual signal simultaneously, the method being characterized by comprising the steps of :
mixing an aural carrier with an amplitude modulated video signal to generate a commonly amplified television transmission signal ;
demodulating the commonly amplified television transmission signal to provide a demodulated aural signal ;
performing a spectral analysis of the demodulated aural signal to determine the presence and frequency of unwanted aural signal noise resulting from unwanted aural carrier modulation ;
generating a non-linear amplitude domain video signal and a non-linear phase domain video signal which respectively having amplitude and phase components that are directly opposite to unwanted amplitude and phase components added to the aural signal by the video signal ;
amplitude and phase modulating the aural signal using the non-linear amplitude domain video signal and the non-linear phase domain video signal, respectively, to generate a modified aural signal ; and
adding the modified aural signal to the visual signal in the transmitter.

15. A method according to Claim 14, characterized in that the aural signal added to the amplitude modulated non-linear amplitude domain video signal and the phase modulated non-linear phase domain video signal is an IF aural signal.

16. A method according to claim 15, characterized in that the visual signal added to the modified aural signal is an IF visual signal.

17. A method according to Claim 14, characterized in that the non-linear amplitude domain video signal and a non-linear phase domain video signal are generated separatly.

18. A method according to Claim 14, characterized in that the non-linear amplitude domain video signal and a non-linear phase domain video signal are respectively amplitude and phase modulated separately.

19. A method according to Claim 14, characterized in that the amplitude modulated non-linear amplitude domain video signal and the phase modulated non-linear phase domain video signal are added to the aural signal separately.

20. A method according to Claim 14, characterized in that the non-linear amplitude domain video signal and the non-linear phase domain video signal respectively have amplitude and phase components that are directly opposite to unwanted amplitude and phase components added to the aural signal by the video signal to eliminate noise in the aural signal at a predetermined frequency as determined by the spectral analysis.

## Patentansprüche

1. Tonträger-Korrektursystem für einen Fernsehsender mit gemeinsamer und gleichzeitiger Verstärkung eines Tonsignals und eines Bildsignals, wobei der Sender mindestens einen Zwischenfrequenz-Videosignalmodulator (19) enthält, der ein Videosignal (25) empfängt und das modulierte Videosignal liefert,
dadurch gekennzeichnet, daß das System enthält:
- eine Videosignal-Verzögerungsschaltung (13), die das Videosignal empfängt und verzögert und ein verzögertes Videosignal liefert,
- einen komplementären, nicht-linearen Verstärker (15), der das verzögerte Videosignal empfängt und getrennt und kontrollierbar ein nicht-lineares Videosignal für die Amplitudendomäne und ein nicht-lineares Videosignal für die Phasendomäne erzeugt, die solche Amplituden- bzw. Phasenkomponenten enthalten, die direkt den unerwünschten Amplituden- und Phasenkomponenten entgegengerichtet sind, die durch das Videosignal dem Tonsignal hinzugefügt werden, wobei die unerwünschten Amplituden- und Phasenkomponenten durch Spektralanalyse des demodulierten Tonsignals bestimmt werden,
- einen Amplituden- und Phasenmodulator (17), der das Tonsignal empfängt und es unter Verwendung der nicht-linearen Videosignale für die Amplitudendomäne bzw. die Phasendomäne in der Amplitude und Phase moduliert, um daraus ein verändertes Tonsignal zu erzeugen,
- und eine Addierschaltung (21), die das veränderte Tonsignal zum Videosignal am Ausgang des Zwischenfrequenz-Videosignalmodulators addiert, um das unerwünschte Rauschen zu verringern, das bei bestimmten Frequenzen im vom Sender empfangenen Tonsignal auftritt.

2. Tonträger-Korrektursystem nach Anspruch 1, dadurch gekennzeichnet, daß die Videosignal-Verzögerungsschaltung (13) eine solche Verzögerung bewirkt, daß eine Koinzidenz zwischen dem veränderten Tonsignal und dem modulierten Zwischenfrequenzsignal in Höhe des Addierers entsteht.

3. Tonträger-Korrektursystem nach Anspruch 1, dadurch gekennzeichnet, daß der nicht-lineare Verstärker (15) erste und zweite Videosignal-Veränderungsmittel (43, 45) aufweist, die getrennt voneinander das nicht-lineare Videosignal für die Amplitudendomäne und das nicht-lineare Videosignal für die Phasendomäne mit verschiedenen Referenzpunkten, Amplituden und wählbaren Polaritäten aus dem verzögerten Videosignal erzeugen.

4. Tonträger-Korrektursystem nach Anspruch 3, dadurch gekennzeichnet, daß das erste Videosignal-Veränderungsmittel über einen Ausgang das nicht-lineare Videosignal für die Amplitudendomäne an einen Amplituden-Modulationseingang des Amplituden- und Phasenmodulators liefert, während das zweite Videosignal-Veränderungsmittel über einen Ausgang das nicht-lineare Videosignal für die Phasendomäne an einen Phasenmodulationseingang des Amplituden- und Phasenmodulators liefert.

5. Tonträger-Korrektursystem nach Anspruch 4, dadurch gekennzeichnet, daß der Amplitudenmodulationseingang das nicht-lineare Videosignal für die Amplitudendomäne an einen Amplitudenmodulator (73) des Amplituden- und Phasenmodulators (17) liefert, um ein amplitudenmoduliertes, nicht-lineares Signal zu erzeugen, und daß der Phasenmodulationseingang das nicht-lineare Videosignal für die Phasendomäne an einen Phasenmodulator (77) des Amplituden- und Phasenmodulators liefert, um ein phasenmoduliertes, nicht-lineares Signal zu erzeugen.

6. Tonträger-Korrektursystem nach Anspruch 5, dadurch gekennzeichnet, daß der Amplituden- und Phasenmodulator (17) einen Tonsignaleingang zum Empfang des Tonsignals sowie Mittel zur Kombination des Tonsignals mit Amplituden- und Phasenmodulationssignalen aufweist, um das veränderte Tonsignal zu erzeugen.

7. Tonträger-Korrektursystem nach Anspruch 6, dadurch gekennzeichnet, daß das am Tonsignaleingang empfangene Tonsignal ein Zwischenfrequenz-Tonsignal ist.

8. Tonträger-Korrektursystem nach Anspruch 3, dadurch gekennzeichnet, daß jedes der ersten und zweiten Videosignal-Veränderungsmittel (43, 45) eine erste (U4, U6) und eine zweite nicht-lineare Verstärkerschaltung (U5, U7) enthält, die Mittel aufweisen, um das verzögerte Videosignal zu empfangen.

9. Tonträger-Korrektursystem nach Anspruch 8, dadurch gekennzeichnet, daß jedes der Mittel zum Empfang des verzögerten Videosignals in der ersten und zweiten nicht-linearen Verstärkerschaltung Eingangspotentiometer (47, 49) aufweist, um einen Bezugspunkt des verzögerten Videosignals festzulegen.

10. Tonträger-Korrektursystem nach Anspruch 9, dadurch gekennzeichnet, daß jede der ersten und zweiten nicht-linearen Verstärkerschaltungen Ausgänge mit Ausgangspotentiometern (51, 53) besitzt, um einen Amplitudenpegel des ausgegebenen Signals festzulegen.

11. Tonträger-Korrektursystem nach Anspruch 10, dadurch gekennzeichnet, daß eine der ersten und zweiten nicht-linearen Verstärkerschaltungen einen Reiter (55) besitzt, um auf kontrollierte Weise eine von zwei entgegengesetzt gepolten Dioden am Ausgang anzuschließen und so das verzögerte Videosignal selektiv auf sich selbst umzufalten.

12. Tonträger-Korrektursystem nach Anspruch 11, dadurch gekennzeichnet, daß jedes der ersten und zweiten Videosignal-Veränderungsmittel (43, 45) mit einem jeweiligen Ausgang an eine Signalumkehrschaltung (59) angeschlossen ist, um selektiv die Richtung eines ausgegebenen nicht-linearen Videosignals zu ändern.

13. Tonträger-Korrektursystem nach Anspruch 1, dadurch gekennzeichnet, daß das Tonsignal ein Zwischenfrequenz-Tonsignal ist.

14. Methode zur Verringerung einer unerwünschten Tonträgermodulation, die durch ein Videosignal in einem Fernsehsender hervorgerufen wird, der gemeinsame Verstärkungsmittel für ein Tonsignal und ein Bildsignal besitzt, gekennzeichnet durch folgende Schritte:
- ein Tonträger wird mit einem amplitudenmodulierten Videosignal gemischt, um ein gemeinsam verstärktes Fernsehsendesignal zu erzeugen;
- das gemeinsam verstärkte Fernsehsendesignal wird demoduliert, um ein demoduliertes Tonsignal zu erzielen;
- man führt eine Spektralanalyse des demodulierten Tonsignals durch, um das Vorliegen und die Frequenz eines unerwünschten Tonsignalrauschens aufgrund der unerwünschten Tonträgermodulation zu bestimmen;
- ein nicht-lineares Videosignal für die Amplitudendomäne und ein nicht-lineares Videosignal für die Phasendomäne werden erzeugt, die Amplituden- bzw. Phasenkomponenten besitzen, welche direkt den unerwünschten Amplituden- und Phasenkomponenten entgegengerichtet sind, die durch das Videosignal dem Tonträger beigefügt wurden;
- das Tonsignal wird mit Hilfe des nicht-linearen Videosignals für die Amplitudendomäne bzw. des nicht-linearen Videosignals für die Phasendomäne nach Amplituden und Phase moduliert, so daß sich ein verändertes Tonsignal ergibt;
- das veränderte Tonsignal wird dem Videosignal im Sender hinzuaddiert.

15. Methode nach Anspruch 14, dadurch gekennzeichnet, daß das Tonsignal, das dem amplitudenmodulierten nicht-linearen Videosignal für die Amplitudendomäne und dem amplitudenmodulierten nicht-linearen Videosignal für die Phasendomäne hinzugefügt wird, ein Zwischenfrequenz-Tonsignal ist.

16. Methode nach Anspruch 15, dadurch gekennzeichnet, daß das Videosignal, das dem veränderten Tonsignal hinzugefügt wird, ein Zwischenfrequenz-Videosignal ist.

17. Methode nach Anspruch 14, dadurch gekennzeichnet, daß das nicht-lineare Videosignal für die Amplitudendomäne und das nicht-lineare Videosignal für die Phasendomäne getrennt erzeugt werden.

18. Methode nach Anspruch 14, dadurch gekennzeichnet, daß das nicht-lineare Videosignal für die Amplitudendomäne und das nicht-lineare Videosignal für die Phasendomäne getrennt hinsichtlich der Amplitude bzw. der Phase moduliert werden.

19. Methode nach Anspruch 14, dadurch gekennzeichnet, daß das amplitudenmodulierte nicht-lineare Videosignal für die Amplitudendomäne und das phasenmodulierte nicht-lineare Videosignal für die Phasendomäne getrennt zum Tonsignal hinzuaddiert werden.

20. Methode nach Anspruch 14, dadurch gekennzeichnet, daß das nicht-lineare Videosignal für die Amplitudendomäne und das nicht-lineare Videosignal für die Phasendomäne Amplituden- bzw. Phasenkomponenten besitzen, die direkt den unerwünschten Amplituden- und Phasenkomponenten entgegengerichtet sind, die dem Tonsignal durch das Videosignal hinzuaddiert wurden, um das Rauschen im Tonsignal bei einer bestimmten Frequenz zu eliminieren, die durch die Spektralanalyse bestimmt wird.

## Revendications

1. Système de correction de porteuse son d'un émetteur de télévision à amplification commune qui amplifie simultanément à la fois un signal son et un signal image, l'émetteur comportant au moins un modulateur vidéo FI (19) pour recevoir un signal vidéo (25) et pour produire le signal image, le système étant caractérisé par:
un circuit de retard vidéo (13) pour recevoir et retarder le signal vidéo en vue de fournir un signal vidéo retardé;
un amplificateur non linéaire complémentaire (15) pour recevoir le signal vidéo retardé et pour générer séparément et de manière contrôlable un signal vidéo non linéaire dans le domaine de l'amplitude et un signal vidéo non linéaire dans le domaine de la phase, lesquels ont respectivement des composantes d'amplitude et de phase qui sont directement opposées aux composantes parasites d'amplitude et de phase ajoutées au signal son par le signal vidéo, lesdites composantes parasites d'amplitude et de phase étant déterminées par analyse spectrale du signal son démodulé.
un modulateur d'amplitude et de phase (17) pour recevoir le signal son et pour moduler en amplitude et en phase le signal son en utilisant le signal vidéo non linéaire dans le domaine de l'amplitude et le signal vidéo non linéaire dans le domaine de la phase, respectivement, en vue de générer un signal son modifié; et
un circuit additionneur (21) pour ajouter le signal son modifié au signal image produit par le modulateur vidéo FI en vue de réduire le bruit parasite apparaissant à des fréquences spécifiques dans le signal son reçu de l'émetteur.

2. Système de correction de porteuse son selon la revendication 1, caractérisé en ce que le circuit de retard vidéo (13) fournit un retard de telle sorte qu'il y ait coïncidence du signal son modifié avec le signal modifié FI au niveau du circuit additionneur.

3. Système de correction de porteuse son selon la revendication 1, caractérisé en ce que l'amplificateur non linéaire (15) comporte des premier et deuxième moyens de modification de signal vidéo (43, 45) pour générer indépendamment le signal vidéo non linéaire dans le domaine de l'amplitude et le signal vidéo non linéaire dans le domaine de la phase, respectivement, avec des points d'écrêtage, amplitudes et polarités sélectionnables divers à partir du signal vidéo retardé.

4. Système de correction de porteuse son selon la revendication 3, caractérisé en ce que le premier moyen de modification de signal vidéo a une sortie pour fournir le signal vidéo non linéaire dans le domaine de l'amplitude à une entrée de modulation d'amplitude du modulateur d'amplitude et de phase et dans lequel le deuxième moyen de modification de signal vidéo a une sortie pour fournir le signal vidéo non linéaire dans le domaine de la phase à une entrée de modulateur de phase du modulateur d'amplitude et de phase.

5. Système de correction de porteuse son selon la revendication 4, caractérisé en ce que l'entrée de modulation d'amplitude fournit le signal vidéo non linéaire dans le domaine de l'amplitude à un modulateur d'amplitude (73) du modulateur d'amplitude et de phase (17) pour générer un signal non linéaire modulé en amplitude et dans lequel l'entrée de modulation de phase fournit le signal vidéo non linéaire dans le domaine de la phase à un modulateur de phase (77) du modulateur d'amplitude et de phase pour générer un signal non linéaire modulé en phase.

6. Système de correction de porteuse son selon la revendication 5, caractérisé en ce que le modulateur d'amplitude et de phase (17) comporte une entrée de signal son pour recevoir le signal son et un moyen pour combiner le signal son avec des signaux de modulation d'amplitude et de phase en vue de produire le signal son modifié.

7. Système de correction de porteuse son selon la revendication 6, caractérisé en ce que le signal son reçu au niveau de l'entrée de signal son est un signal son FI.

8. Système de correction de porteuse son selon la revendication 3, caractérisé en ce que les premier et deuxième moyens de modification de signal vidéo (43, 45) comportent chacun des premier (U₄, U₆) et deuxième (U₅, U₇) circuits amplificateurs non linéaires respectivement ayant des moyens de réception pour recevoir le signal vidéo retardé.

9. Système de correction de porteuse son selon la revendication 8, caractérisé en ce que les moyens de réception des premier et deuxième circuits amplificateurs non linéaires comportent chacun des potentiomètres (47, 49) pour fixer un point d'écrêtage du signal vidéo retardé.

10. Système de correction de porteuse son selon la revendication 9, caractérisé en ce que les premier et deuxième circuits amplificateurs non linéaires comportent chacun des sorties ayant des potentiomètres de sortie (51, 53) pour fixer un niveau d'amplitude d'un signal produit par celles-ci.

11. Système de correction de porteuse son selon la revendication 10, caractérisé en ce que l'un des premier et deuxième circuits amplificateurs non linéaires a un cavalier (15) pour connecter de manière contrôlable l'une d'une paire de diodes conduisant en opposition à leur sortie pour replier sélectivement sur lui-même le signal vidéo retardé.

12. Système de correction de porteuse son selon la revendication 11, caractérisé en ce que les premier et deuxième moyens de modification de signal vidéo (43, 45) sont chacun respectivement connectés, à l'une de leur sortie, à un circuit inverseur de signal (59) pour changer sélectivement un sens d'un signal vidéo non linéaire produit par celle-ci.

13. Système de correction de porteuse son selon la revendication 1, caractérisé en ce que le signal son est un signal son FI.

14. Méthode de réduction d'une modulation parasite de porteuse son causée par un signal vidéo dans un émetteur de télévision à amplification commune qui amplifie simultanément à la fois un signal son et un signal image, la méthode étant caractérisée par les étapes de:
mélange d'une porteuse son avec un signal vidéo modulé en amplitude en vue de générer un signal d'émission de télévision amplifié de manière commune;
démodulation du signal d'émission de télévision amplifié de manière commune en vue de fournir un signal son démodulé;
exécution d'une analyse spectrale du signal son démodulé en vue de déterminer la présence et la fréquence d'un bruit parasite de signal son résultant d'une modulation parasite de porteuse son;
génération d'un signal vidéo non linéaire dans le domaine de l'amplitude et d'un signal vidéo non linéaire dans le domaine de la phase, lesquels ont respectivement des composantes d'amplitude et de phase qui sont directement opposées aux composantes parasites d'amplitude et de phase ajoutées au signal son par le signal vidéo;
modulation en amplitude et en phase du signal son en utilisant le signal vidéo non linéaire dans le domaine de l'amplitude et le signal vidéo non linéaire dans le domaine de la phase, respectivement, en vue de générer un signal son modifié; et
addition du signal son modifié au signal image dans l'émetteur.

15. Méthode selon la revendication 14, caractérisée en ce que le signal son ajouté au signal vidéo non linéaire dans le domaine de l'amplitude modulé en amplitude et au signal vidéo non linéaire dans le domaine de la phase modulé en phase est un signal son FI.

16. Méthode selon la revendication 15, caractérisé en ce que le signal image ajouté au signal son modifié est un signal image FI.

17. Méthode selon la revendication 14, caractérisée en ce que le signal vidéo non linéaire dans le domaine de l'amplitude et un signal vidéo non linéaire dans le domaine de la phase sont générés séparément.

18. Méthode selon la revendication 14, caractérisée en ce que le signal vidéo non linéaire dans le domaine de l'amplitude et un signal vidéo non linéaire dans le domaine de la phase sont respectivement modulés en amplitude et en phase séparément.

19. Méthode selon la revendication 14, caractérisée en ce que le signal vidéo non linéaire dans le domaine de l'amplitude modulé en amplitude et le signal vidéo non linéaire dans le domaine de la phase modulé en phase sont ajoutés au signal son séparément.

20. Méthode selon la revendication 14, caractérisée en ce que le signal vidéo non linéaire dans le domaine de l'amplitude et le signal vidéo non linéaire dans le domaine de la phase ont respectivement des composantes d'amplitude et de phase qui sont directement opposées aux composantes parasites d'amplitude et de phase ajoutées au signal son par le signal vidéo en vue d'éliminer le bruit dans le signal son à une fréquence prédéterminée telle que déterminée par l'analyse spectrale.
